# EUROPÄISCHE PATENTANMELDUNG

(11) **EP 2 562 521 A2**
(43) Veröffentlichungstag der Anmeldung: **27.02.2013**
(21) Anmeldenummer: 12170157.7
(22) Anmeldetag: 31.05.2012
(51) Int. Cl.: G01K 11/26, G01K 13/06, G01L 1/16

(54) **Linearbewegungsvorrichtung mit Oberflächenwellensensor und drahtloser Sensorsignanalübertragung**

(30) Priorität: 06.07.2011 DE 102011106699
(71) Anmelder: ROBERT BOSCH GMBH, 70442 Stuttgart (DE)
(72) Erfinder: Senft, Daniel, 96160 Geiselwind (DE)
(74) Vertreter: Maiß, Harald

(57) **Zusammenfassung**

Die Erfindung betrifft eine Linearbewegungsvorrichtung (10) mit einer langgestreckten Basis (11) und einem gegenüber der Basis (11) linearbeweglichen Läufer (20), wobei an dem Läufer (20) ein Sensor (40; 41) und eine Sensorantenne (60; 61) zur drahtlosen Übertragung der Sensorsignale angebracht sind, wobei an der Basis (11) eine zugeordnete Sende- und Empfangseinrichtung (14; 15) vorgesehen ist. Erfindungsgemäß weist der Sensor (40; 41) eine erste und eine zweite Elektrode (42; 43) auf, die jeweils zwei kammartig ineinander verzahnte Leiterstrukturen (44) aufweisen, welche mit der Sensorantenne (60; 61) verbunden sind, wobei die erste und die zweite Elektrode (42; 43) beabstandet voneinander auf einem piezoelektrischen Substrat (49) aufgebracht sind, wobei das Substrat (49) mit dem Läufer (20) fest verbunden ist.

## Beschreibung

Die Erfindung betrifft eine Linearbewegungsvorrichtung gemäß dem Oberbegriff von Anspruch 1.

Aus der JP 2003-011038 A ist eine Linearbewegungsvorrichtung bekannt, die als Schienenführung, als Gewindetrieb oder als Gesamtbaugruppe, in welche die vorgenannten Komponenten eingebaut sind, ausgeführt sein kann. Gemäß der Fig. 5 der JP 2003-011038 A umfasst die Linearbewegungsvorrichtung eine Basis 1 in Form einer langgestreckten Führungsschiene. An der Basis ist ein Läufer 10 in Form eines U-förmigen Führungswagens linearbeweglich geführt. An dem Läufer ist ein Sensor 21 befestigt, dessen Sensorsignale drahtlos mittels Radiowellen an eine Sende- und Empfangseinrichtung an der Basis übertragen werden. Der entsprechende Sender 23 ist mit einer Sensorantenne verbunden. Damit können die Sensorsignale ohne Verwendung eines Kabels zwischen Läufer und Basis übertragen werden. Ein derartiges Kabel wird bei der Verwendung der Linearbewegungsvorrichtung häufig als störend empfunden, da es sich bei einer Bewegung des Läufers verformen muss.

Bei der langgestreckten Basis kann es sich auch um die Gewindespindel eines Gewindetriebs handeln, wobei der Läufer die zugeordnete Mutter ist. Weiter kann die Basis das Gehäuse eines Linearmoduls sein, wobei der Läufer das bewegliche Tischteil ist.

Der Nachteil der bekannten Linearbewegungsvorrichtung besteht darin, dass zur Versorgung des Sensors und des Sensors am Läufer eine Energieversorgung 23, beispielsweise eine Batterie, erforderlich ist.

Die Aufgabe der Erfindung besteht darin, eine Linearbewegungsvorrichtung bereitzustellen, deren Sensor ohne eigene Energieversorgung auskommt.

Gemäß dem selbständigen Anspruch wird diese Aufgabe dadurch gelöst, dass der Sensor eine erste und eine zweite Elektrode aufweist, die jeweils zwei kammartig ineinander verzahnte Leiterstrukturen aufweisen, welche mit der Sensorantenne verbunden sind, wobei die erste und die zweite Elektrode beabstandet voneinander auf einem piezoelektrischen Substrat aufgebracht sind, wobei das Substrat mit dem Läufer fest verbunden ist. Bei dem Substrat kann es sich beispielsweise um Quarz, LiNbO₃ oder LiTaO₃ handeln, also um vergleichsweise harte Materialien, in denen sich mechanische Oberflächenwellen gut ausbreiten können. Wenn an die erste Elektrode eine elektrische Wechselspannung angelegt wird, erzeugen die kammartig ineinander verzahnten Leiterstrukturen aufgrund des umgekehrten piezoelektrischen Effekts mechanische Oberflächenwellen in dem Substrat, die sich zu der zweiten Elektrode hin ausbreiten. Dort bewirkt der piezoelektrische Effekt, dass in die kammartige Leiterstruktur eine elektrische Wechselspannung eingeprägt wird. Die Wechselspannungen an der ersten und der zweiten Elektrode weisen dabei einen Zeitversatz auf, der abhängig von der Laufzeit der mechanischen Oberflächenwelle von der ersten zur zweiten Elektrode ist. Die optimale Frequenz der Wechselspannung hängt von der Ausbreitungsgeschwindigkeit der mechanischen Oberflächenwellen in dem Substrat und dem vorzugsweise konstanten Teilungsabstand der kammartigen Leiterstruktur ab.

Die erste und die zweite Elektrode können ohne Zwischenschaltung aktiver elektronischer Bauteile mit einer Antenne für elektromagnetische Wellen verbunden sein. Dabei kann für die erste und die zweite Elektrode jeweils eine gesonderte Antenne vorgesehen sein. Soweit die Wechselspannungen an der ersten und der zweiten Elektrode leicht abweichende Frequenzen aufweisen, können die beiden Elektroden auch mit einer einzigen Sensorantenne verbunden sein.

Die Sende- und Empfangseinrichtung sendet eine erste elektromagnetische Welle aus, die von der Sensorantenne in eine erste Wechselspannung verwandelt wird, welche an der ersten Elektrode anliegt. Die zweite Wechselspannung an der zweiten Elektrode wird von der Sensorantenne in eine zweite elektromagnetische Welle verwandelt, die von der Sende- und Empfangseinrichtung empfangen wird. Der Zeitversatz zwischen der ersten und der zweiten elektromagnetischen Welle wird als Sensorsignal gemessen. Dieser Zeitversatz kann ein Maß für verschiedene physikalische Größen wie mechanische Spannung oder Temperatur sein.

In den abhängigen Ansprüchen sind vorteilhafte Weiterbildungen und Verbesserungen der Erfindung angegeben.

Es kann ein Gewindetrieb mit einer langgestreckten Spindel und einer Mutter, die mit der Spindel in Schraubeingriff steht, vorgesehen sein, wobei der Läufer mittels des Gewindetriebs gegenüber der Basis bewegbar ist, wobei die Sensorantenne eine Leiterstruktur umfasst, welche ringartig um die Drehachse der Spindel herum angeordnet ist. Es ist bekannt, den Läufer einer Linearbewegungsvorrichtung anzutreiben. Da in Linearbewegungsvorrichtungen typischerweise wenig Platz vorhanden ist, ergibt sich das Problem, die Sensorantenne so anzuordnen, dass sie die Bewegung des Läufers nicht behindert. Dieses Ziel wird mit einer ringartig um die Spindel herum angeordnete Antenne erreicht. Eine derartige Antenne besitzt überdies für den vorgeschlagenen Sensor günstige Sende- und Empfangseigenschaften. Weiter sind die Übertragungseigenschaften der Sensorantenne im Wesentlichen unabhängig von deren Drehstellung bezüglich der Drehachse der Spindel.

Der Läufer kann langgestreckt ausgebildet sein, wobei ein freies Ende des Läufers je nach Stellung des Läufers unterschiedlich weit aus der Basis herausragt, wobei der Sensor mit der Sensorantenne an dem freien Ende des Läufers befestigt ist, wobei Oberflächenwellenausbreitungsgeschwindigkeit des Substrats von der mechanischen Spannung abhängig ist. Eine Linearbewegungsvorrichtung mit einem langgestreckten aus der Basis herausragenden Läufer kann beispielsweise in Form eines pneumatischen, hydraulischen oder elektromechanischen Zylinders ausgeführt sein. Bei derartigen Zylindern besteht das Bedürfnis, die Verfahrkraft am Läufer zu messen. Die genannte Kraft kann am freien Ende des Läufers sehr genau gemessen werden, da sie dort über einen einzigen, kleinräumigen Materialquerschnitt geleitet wird. Die Verfahrkraft verursacht in dem freien Ende des Läufers eine mechanische Verformung, die sich auf das Substrat des Sensors überträgt. Die dadurch verursachten mechanischen Spannungen verändern die Ausbreitungsgeschwindigkeit der mechanischen Oberflächenwellen in dem Substrat und mithin den Zeitversatz der Wechselspannungen an der ersten und der zweiten Elektrode. Der genannte Zeitversatz ist damit ein Maß für die Verfahrkraft am Läufer.

Die Mutter kann fest mit dem Läufer verbunden sein, wobei der Sensor mit der Sensorantenne an der Mutter befestigt ist, wobei die Oberflächenwellenausbreitungsgeschwindigkeit des Substrats von der Temperatur abhängig ist, wobei der Gewindetrieb vorzugsweise als Planetengewindetrieb ausgeführt ist. Bei einem Gewindetrieb, insbesondere bei einem Planetengewindetrieb, besteht häufig das Bedürfnis, die Temperatur der Mutter zu überwachen, damit eine Überhitzung derselben vermieden werden kann. Bei der vorgeschlagenen Ausführungsform nimmt das Substrat des Sensors die Temperatur der Mutter an. Die dadurch verursachte Veränderung der Oberflächenwellenausbreitungsgeschwindigkeit beeinflusst den Zeitversatz der Wechselspannungen an der ersten und der zweiten Elektrode. Der genannte Zeitversatz ist damit ein Maß für die Temperatur der Mutter.

Die Erfindung wird im Folgenden anhand der beigefügten Zeichnungen näher erläutert. Es stellt dar:
- Fig. 1: eine grobschematische Darstellung einer erfindungsgemäßen Linearbewegungsvorrichtung;
- Fig. 2: eine perspektivische Darstellung eines erfindungsgemäßen Sensors;
- Fig. 3: eine grobschematische Darstellung einer ersten Ausführungsform einer erfindungsgemäßen Sensorantenne;
- Fig. 4: eine grobschematische Darstellung einer zweiten Ausführungsform einer erfindungsgemäßen Sensorantenne; und
- Fig. 5: eine grobschematische Darstellung einer dritten Ausführungsform einer erfindungsgemäßen Sensorantenne.

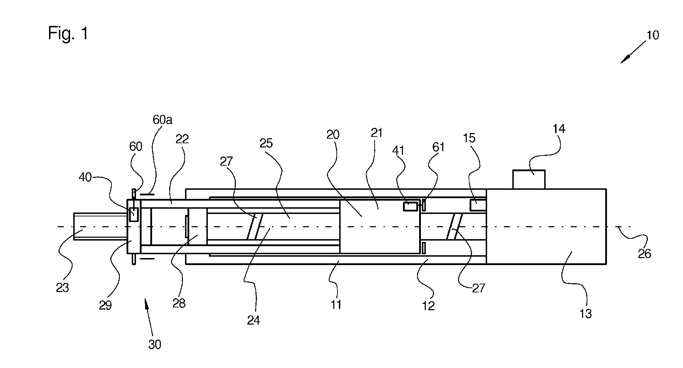

Fig. 1 zeigt eine grobschematische Darstellung einer erfindungsgemäßen Linearbewegungsvorrichtung 10. Die Linearbewegungsvorrichtung 10 umfasst eine Basis 11, welche aus einem Vierkantrohr 12 und einem Elektromotor 13 besteht, die fest miteinander verbunden sind. Das Vierkantrohr 12 ist aus Aluminium im Strangpressverfahren hergestellt, wobei es auch aus Stahl hergestellt sein kann. Der Elektromotor 13 steht in Drehantriebsverbindung mit der Spindel 25 eines Gewindetriebs 24, insbesondere eines Kugel-, eines Planeten- oder eines Trapezgewindetriebs, so dass er die Spindel 25 bezüglich einer Drehachse 26 in Rotationsbewegung versetzen kann. Um die Spindel 25 herum ist die Mutter 21 des Gewindetriebs 24 angeordnet, welche mit dem Gewinde 27 der Spindel 25 in Schraubeingriff steht. Anzumerken ist, dass in Fig. 1 nur zwei einzelne Gewindeumläufe 27 des Gewindes dargestellt sind, welches sich über die gesamte Länge der Spindel 25 erstreckt. Die Mutter 21 bildet zusammen mit dem Schubrohr 22 und dem Befestigungsmittel 23 den Läufer 20 der Linearbewegungsvorrichtung 10. Das Schubrohr 22 ist bis auf eine Verdrehsicherung kreiszylindrisch ausgeführt und umgibt die Spindel 25 abschnittsweise, wobei es je nach Stellung des Läufers 20 unterschiedlich weit aus der Basis 11, insbesondere dem Vierkantrohr 12 herausragt. Am freien Ende 30 des Schubrohres 22 ist ein Befestigungsmittel 23 vorgesehen, das beispielsweise in Form eines Gewindes oder eines Kugelgelenks ausgeführt sein kann. Am freien Ende der Spindel 25 ist eine Endabstützung 28 aus Kunststoff vorgesehen, die drehbar an der Spindel 25 gelagert ist, wobei sie gleitend an dem Schubrohr 22 abgestützt ist.

An dem freien Ende 30 des Schubrohres 22 ist ein erster Sensor 40 angebracht, der zur Messung der Verfahrkraft der Linearbewegungsvorrichtung 10 dient. Das Substrat des ersten Sensors 40 kann beispielsweise auf eine kreiszylindrische Außenumfangsfläche des Schubrohres 22 oder des Verbindungsabschnitts 29 zum Befestigungsmittel 23 aufgeklebt sein. Benachbart zu dem ersten Sensor 40 ist eine zugeordnete erste Sensorantenne 60 angeordnet, welche das Schubrohr 22 und mithin die Drehachse 26 der Spindel 25 ringförmig umgibt. Die erste Sensorantenne 60 ist bevorzugt in Form einer Kreisringscheibe ausgeführt, so dass sich hierdurch besonders gute Sende- und Empfangseigenschaften ergeben. Es ist aber auch möglich, die Sensorantenne in Form eines Kreiszylinders auszubilden, wie dies in Fig. 1 unter dem Bezugszeichen 60a angedeutet ist. Weiter können mehrere gesonderte Stabantennen vorgesehen sein, die ringartig verteilt um das Schubrohr 22 angeordnet sind. Auch eine Parabol- oder eine Schlitzantenne kann als Sensorantenne 60; 61 eingesetzt werden. Die dem ersten Sensor 40 zugeordnete erste Sende- und Empfangseinrichtung 14 ist außen an dem Elektromotor 13 angebracht.

An der Mutter 21 ist ein zweiter Sensor 41 angebracht, der zur Messung der Temperatur der Mutter 21 dient. Das Substrat des zweiten Sensors 41 kann beispielsweise auf eine kreiszylindrische Außenumfangsfläche der Mutter 21 aufgeklebt sein, so dass es die gleiche Temperatur wie die Mutter 21 annimmt. Die zweite Sensorantenne 61 ist im Wesentlichen identisch zur ersten Sensorantenne 60, jedoch mit einem anderen Durchmesser ausgeführt. Die plattenartige zweite Sendeantenne 61 ist an einer ebenen Stirnfläche der Mutter 21 befestigt, wobei sie an den zweiten Sensor 41 elektrisch angeschlossen ist. Die dem zweiten Sensor 41 zugeordnete zweite Sende- und Empfangseinrichtung 15 ist im Inneren des Vierkantrohres 12 am Elektromotor 13 angebracht. Am ersten und am zweiten Sensor 40; 41 werden vorzugsweise Wechselspannungen mit unterschiedlicher Frequenz eingesetzt, damit sich die beiden Sensoren 40; 41 bei der drahtlosen Übertragung der Sensorsignale nicht gegenseitig stören.

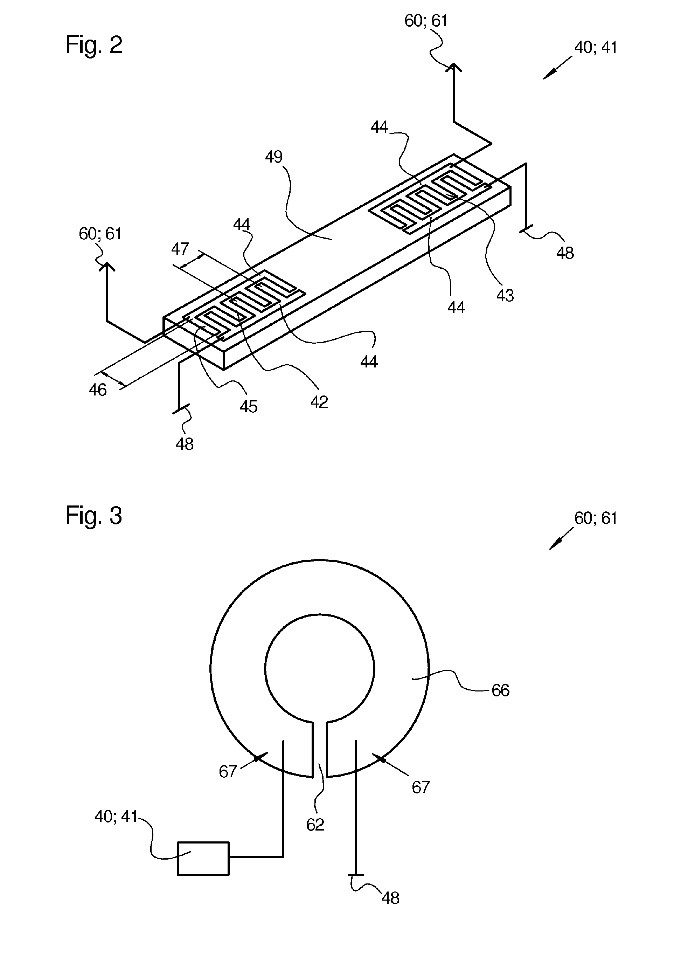

Fig. 2 zeigt eine perspektivische Darstellung eines erfindungsgemäßen Sensors 40; 41. Der Sensor umfasst ein Substrat 49 aus piezoelektrischem Material, beispielsweise Quarz, LiNbO₃ oder LiTaO₃. Zu jeder physikalischen Größe, wie mechanische Spannung oder Temperatur, die gemessen werden soll, ist das passende piezoelektrische Material auszuwählen. Dabei muss sich die Ausbreitungsgeschwindigkeit mechanischer Oberflächenwellen im Substrat 49 bei einer Änderung der zu messenden physikalischen Größe am Substrat 49, vorzugsweise proportional, mit ändern.

Das Substrat 49 ist in Form einer vorzugsweise rechteckigen ebenen Platte ausgeführt, wobei die Dicke des Substrats 49 in Vergleich zu den übrigen Abmessungen in Fig. 2 übertrieben dargestellt ist. Auf das Substrat sind mit Hilfe eines Beschichtungs-, Belichtungs- und Ätzprozesses kammartige Leiterstrukturen 44 aus Kupfer aufgebracht worden. Je zwei kammartige ineinander greifende Leiterstrukturen 44 bilden eine Elektrode 42; 43 des Sensors 40; 41. Dabei ist eine Leiterstruktur 44 einer Elektrode 42; 43 mit der elektrischen Masse 48 verbunden, wohingegen die andere mit der Sensorantenne 60; 61 verbunden ist.

Der Abstand 47 der geraden, parallelen Zähne 45 einer Leiterstruktur ist konstant, wobei die Länge 46 der Zähne 45 unterschiedlich ausgeführt sein kann, um die Umwandlung von elektrischer Wechselspannung in mechanische Oberflächenwellen und umgekehrt zu verbessern. Die erste und die zweite Elektrode 42; 43 sind mit Abstand zueinander auf dem Substrat 49 angeordnet, wobei der Abstand der beiden Elektroden den Weg definiert, den die Oberflächenwellen zurücklegen müssen.

Fig. 3 zeigt eine grobschematische Darstellung einer ersten Ausführungsform einer erfindungsgemäßen Sensorantenne 60; 61. Diese ist in Form einer plattenartigen, geschlitzten Kreisringscheibe 66 aus Metall, vorzugsweise Kupfer oder Aluminium, ausgeführt, welche die Leiterstruktur der Sensorantenne 60; 61 bildet. Die elektrischen Anschlüsse 67 befinden sich zu beiden Seiten des Schlitzes 62 an der Kreisringscheibe 66, wobei ein Anschluss 67 mit der elektrischen Masse 48 verbunden ist, wohingegen der andere Anschluss 67 mit dem Sensor 40; 41 verbunden ist.

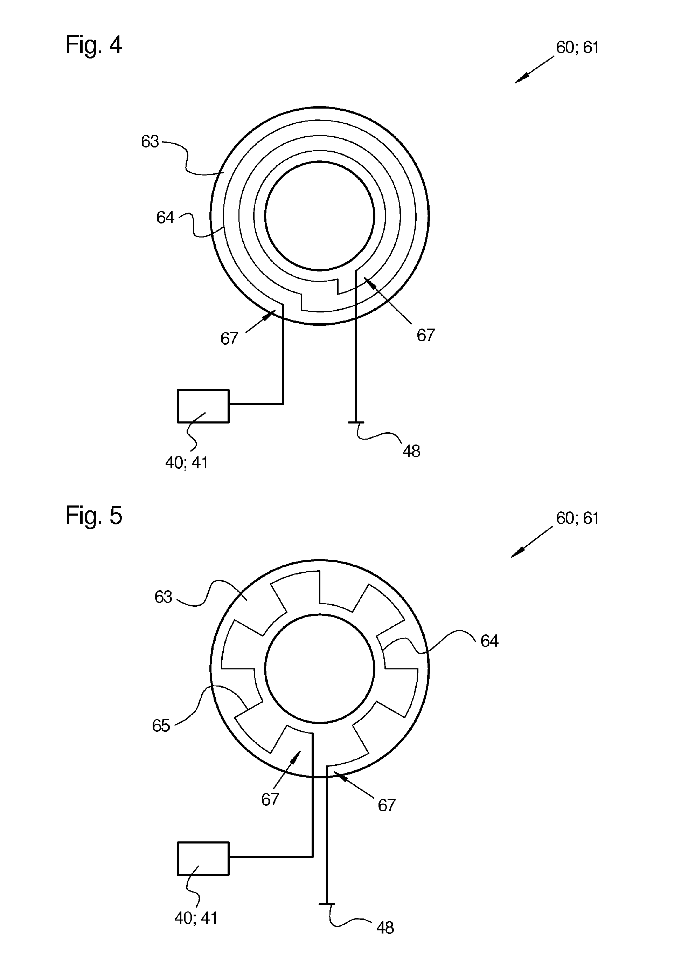

Fig. 4 zeigt eine grob schematische Darstellung einer zweiten Ausführungsform einer erfindungsgemäßen Sensorantenne 60; 61. Diese weist einen plattenartigen, kreisringförmigen Träger 63 aus elektrisch nichtleitendem Material, beispielsweise Kunststoff auf. Auf dem Träger 63 ist eine im Wesentlichen spiralförmig verlaufende Leiterbahn 64 als Leiterstruktur der Sensorantenne 60; 61 aufgebracht. Dies kann beispielsweise mit einem Beschichtungs-, Belichtungs- und Ätzprozess geschehen. Die beiden elektrischen Anschlüsse 67 am Ende der Leiterbahn 64 sind mit der elektrischen Masse 48 und mit dem Sensor 40; 41 verbunden.

Fig. 5 zeigt eine grobschematische Darstellung einer dritten Ausführungsform einer erfindungsgemäßen Sensorantenne 60; 61. Diese unterscheidet sich von der zweiten Ausführungsform der Sensorantenne nur dadurch, dass die Leiterbahn 64 nicht spiralsondern mäanderförmig verläuft. Die Abmessungen der Mäanderwindungen 65 sind entsprechend der Frequenz der elektromagnetischen Wellen zu wählen.

### Bezugszeichenliste

- 10: Linearbewegungsvorrichtung
- 11: Basis
- 12: Vierkantrohr
- 13: Elektromotor
- 14: erste Sende- und Empfangseinrichtung
- 15: zweite Sende- und Empfangseinrichtung

- 20: Läufer
- 21: Mutter
- 22: Schubrohr
- 23: Befestigungsmittel
- 24: Gewindetrieb
- 25: Spindel
- 26: Drehachse
- 27: Gewinde
- 28: Endabstützung
- 29: Verbindungsabschnitt
- 30: freies Ende des Läufers

- 40: erster Sensor
- 41: zweiter Sensor
- 42: erste Elektrode
- 43: zweite Elektrode
- 44: kammartige Leiterstruktur
- 45: Zahn
- 46: Länge eines Zahns
- 47: Abstand der Zähne
- 48: Masse
- 49: Substrat
- 60: erste Sensorantenne
- 60a: erste Sensorantenne (alternative Anordnung)
- 61: zweite Sensorantenne
- 62: Schlitz
- 63: Träger
- 64: Leiterbahn
- 65: Mäanderwindung
- 66: Kreisringscheibe
- 67: elektrischer Anschluss

## Patentansprüche

1. Linearbewegungsvorrichtung (10) mit einer langgestreckten Basis (11) und einem gegenüber der Basis (11) linearbeweglichen Läufer (20), wobei an dem Läufer (20) ein Sensor (40; 41) und eine Sensorantenne (60; 61) zur drahtlosen Übertragung der Sensorsignale angebracht sind, wobei an der Basis (11) eine zugeordnete Sende- und Empfangseinrichtung (14; 15) vorgesehen ist,
**dadurch gekennzeichnet, dass** der Sensor (40; 41) eine erste und eine zweite Elektrode (42; 43) aufweist, die jeweils zwei kammartig ineinander verzahnte Leiterstrukturen (44) aufweisen, welche mit der Sensorantenne (60; 61) verbunden sind, wobei die erste und die zweite Elektrode (42; 43) beabstandet voneinander auf einem piezoelektrischen Substrat (49) aufgebracht sind, wobei das Substrat (49) mit dem Läufer (20) fest verbunden ist.

2. Linearbewegungsvorrichtung nach Anspruch 1,
**dadurch gekennzeichnet, dass** ein Gewindetrieb (24) mit einer langgestreckten Spindel (25) und einer Mutter (21), die mit der Spindel in Schraubeingriff steht, vorgesehen ist, wobei der Läufer (20) mittels des Gewindetriebs (24) gegenüber der Basis (11) bewegbar ist, wobei die Sensorantenne (60; 61) eine Leiterstruktur (66; 64) umfasst, welche ringartig um die Drehachse (26) der Spindel (25) herum angeordnet ist.

3. Linearbewegungsvorrichtung nach einem der vorstehenden Ansprüche,
**dadurch gekennzeichnet, dass** der Läufer (20) langgestreckt ausgebildet ist, wobei eine freies Ende (30) des Läufers (20) je nach Stellung des Läufers (20) unterschiedlich weit aus der Basis (11) herausragt, wobei der Sensor (40) mit der Sensorantenne (60) an dem freien Ende (30) des Läufers (20) befestigt ist, wobei Oberflächenwellenausbreitungsgeschwindigkeit des Substrats (49) von der mechanischen Spannung abhängig ist.

4. Linearbewegungsvorrichtung nach einem der Ansprüche 2 oder 3,
**dadurch gekennzeichnet, dass** die Mutter (21) fest mit dem Läufer (20) verbunden ist, wobei der Sensor (41) mit der Sensorantenne (61) an der Mutter (21) befestigt ist, wobei die Oberflächenwellenausbreitungsgeschwindigkeit des Substrats (49) von der Temperatur abhängig ist, wobei der Gewindetrieb (24) vorzugsweise als Planetengewindetrieb ausgeführt ist.
